# EUROPÄISCHE PATENTSCHRIFT

(11) **EP 0 654 017 B1**
(45) Veröffentlichungstag und Bekanntmachung des Hinweises auf die Patenterteilung: **15.05.1996**
(21) Anmeldenummer: 93917763.0
(22) Anmeldetag: 06.08.1993
(51) Int. Cl.: C03C 25/00, C03B 37/00, F26B 11/00

(54) **VERFAHREN UND VORRICHTUNG ZUR THERMISCHEN BEHANDLUNG VON ABFALL- UND/ODER RESTSTOFFEN**
THERMAL TREATMENT PROCESS AND DEVICE FOR WASTE AND/OR RESIDUAL MATERIALS
PROCEDE ET DISPOSITIF DE TRAITEMENT THERMIQUE DE DECHETS ET/OU DE RESIDUS

(30) Priorität: 08.08.1992 DE 4226271
(43) Veröffentlichungstag der Anmeldung: 24.05.1995
(73) Patentinhaber: WTU WARMETECHNIK UND UMWELTSCHUTZ GMBH, D-07745 Jena (DE)
(72) Erfinder: BALTZER, Franz, D-07747 Jena (DE); JÜPTNER, Horst, D-07749 Jena (DE)
(74) Vertreter: Pfeiffer, Rolf-Gerd
(86) Internationale Anmeldenummer: EP9302100
(87) Internationale Veröffentlichungsnummer: WO9403406

(56) Entgegenhaltungen:
- DE-A- 2 849 476
- DE-C- 258 336
- US-A- 3 847 664
- US-A- 3 950 861
- US-A- 5 019 171

## Beschreibung

Die Erfindung beinhaltet ein Verfahren und eine Vorrichtung zur thermischen Behandlung von Abfall- und/oder Reststoffen, insbesondere von Glasseide, Glasfasern, Glaswolle und Glasvlies, einschließlich der daraus hergestellten Produkte, gemäß der Gattung der Patentansprüche und im Hinblick auf ihre Wiederverwendung.

Die Wiederverwendung von Glasfaser- und Glasseidenabfällen bzw. Produkten daraus und/oder Glaswolleabfällen u.ä. Glasfasern beinhaltenden Materialien, z.B. als Füllmasse in der Plast- oder Bauindustrie, oder die Rückgewinnung als Rohstoff für die Glasschmelze macht es erforderlich, daß im Herstellungsprozeß aufgebrachte organische Schlichtmittel entfernt werden. Dies ist, solange die aufgetragene Schicht in wässriger Form vorliegt, also nicht ausgehärtet ist, durch Abspülen möglich, wegen des hohen Wasserverbrauchs aber ökologisch unzweckmäßig und unwirtschaftlich.

Die thermische Behandlung von Fasermaterialien zum Zwecke der Beseitigung der organischen Ummantelungen ist vielfach versucht worden. So ist aus der FR-PS 2 199 856 ein Verfahren bekannt, bei dem organische Stoffe enthaltende Abprodukte aus anorganischen Fasern in einen elektrisch beheizten Schmelzofen eingelegt werden, in dessen Oberofen die Temperatur so hoch gehalten wird, daß die Oberflächenschicht der Abprodukte schmilzt. Entstehende Gase entweichen durch einen Abzug. Der Nachteil einer solchen Lösung besteht in der Verknüpfung von Aufbereitungs- und Schmelzprozeß, was Qualitätsmängel der Schmelze erwarten läßt. Da Glasseidenabfälle nicht ausschließlich wieder eingeschmolzen werden sollen, wird vielfach eine thermische Behandlung in besonders dafür vorgesehenen Anlagen vorgenommen. So ist aus der DD-PS 113 209 ein Verfahren zur Aufbereitung von Glasseidenabfällen bekannt, bei dem diese zuvor zu einem Vließ gepreßt, in Wagen in einem Tunnelofen aufgeheizt und anschließend in Wasser abgeschreckt werden. Daran schließt sich eine mechanische Zerkleinerung an. Es ist auch aus der DE-OS 28 49 476 bekannt, vorzerkleinerte Abfälle von Glasfäden einer dreistufigen thermischen Behandlung mit von Stufe zu Stufe steigender Temperatur zu unterziehen. Dafür kommt ein horizontaler oder vertikaler Durchlaufofen zur Anwendung, bei dem die Abfälle von Stufe zu Stufe transportiert werden und in jeder Stufe eine beträchtliche Zeit verweilen.

Weiter ist aus der DD-PS 146 450 ein Verfahren bekannt, Glasrohstoffe aus Glasseidenspinnabfall zu gewinnen. Der Glasseidenspinnabfall wird unterhalb der Düsenwanne mechanisch zerkleinert und durchläuft während einer Zeitdauer von drei Stunden die vorzugsweise zwei Temperaturstufen eines gas- oder elektrisch beheizten Durchlaufofens, wobei in der ersten Stufe die Beschichtung abbrennt und in der zweiten Stufe eine Abkühlung unter 150°C erfolgt. Eine mechanische Zerkleinerung schließt sich an, entstehende Gase werden in der ersten Stufe abgesaugt. Derartige Verfahren erfordern vor der thermischen Behandlung einen zusätzlichen Arbeitsgang, z.B. die Vorzerkleinerung der Abfälle, wozu besondere Anlagen errichtet werden müssen. Die Durchlaufzeit der Glasseidenspinnabfälle durch den Ofen ist unverhältnismäßig lang. Aus der DE-OS 23 41 406 sind auch ein Verfahren und eine Vorrichtung bekannt, Glasfasern aus aufgerollten, endlosen Glasfaservließabfällen zu gewinnen. Nach Passieren einer Vorheizvorrichtung gelangt das Vließ im Verbrennungsofen durch die Heizgase in die Schwebe über dem umlaufenden Siebband. Die Rauchgase des Verbrennungsofens werden in die Vorheizvorrichtung geleitet. Der zur Durchführung des Verfahrens angegebene Flüssiggasbedarf ist für die Rückgewinnung der Glasfasern unrentabel. In der DD-PS 233 994 wird ein elektrisch beheizter Durchlaufofen beschrieben, der mit Luftumwälzung arbeitet. Hier besteht bei der Aufbereitung feinfädiger Abfälle die Gefahr, daß Fadenreste oder Einzelfäden mit dem Luftstrom mitgetragen werden und zu Kurzschlüssen in der Elektrobeheizung führen.
Schließlich sind aus der DE-PS 258 336 und aus der DE-PS 887 626 Trockentrommeln oder Drehtrommeln bekannt, die an ihren Innenwandungen mit Hubflächen oder Hubschaufeln zum Umwälzen des zu trocknenden Guts oder der zu brennenden Stoffe versehen sind. Die bloße Anwendung derartiger Trocken- oder Drehtrommeln zum thermischen Behandeln und Aufbereiten der Stoffe ist unwirtschaftlich und führt nicht zur erforderlichen Reinheit der Produkte.

Die Erfindung soll die aufgezeigten Mängel beseitigen und ein Verfahren sowie eine Vorrichtung zur thermischen Aufbereitung von Abfall- bzw. Reststoffen, insbesondere von Glasseide, Glasfasern, Glaswolle und Glasvlies, einschließlich der daraus hergestellten Produkte schaffen, die das Entfernen der organischen Ummantelung der Stoffe in kürzester Zeit vollständig ermöglichen und auch für große Durchsätze an thermisch zu behandelnden Stoffen (bspw. 1 t/h und mehr) anwendbar sind. Dabei ist zu beachten, daß eine hohe Temperatur die Abfälle sintert und die Reaktionsprodukte der thermischen Behandlung nicht entweichen läßt, und daß eine zu langsame Erwärmung das Recyclingverfahren unwirtschaftlich werden läßt.

Gemäß der Erfindung wird die vorstehend umrissene Aufgabe durch die Kennzeichen des 1., 10. und 24. Patentanspruchs gelöst. Die gute, vorzugsweise zunehmende Auflockerung beim Transport der Abfall- bzw. Reststoffe von der Eintragseite zur Austragseite und der von der Austragseite zur Eintragseite gerichtete Heißgasstrom, der gleichzeitg der Auflockerung und der thermischen Behandlung der Abfall- und/oder Reststoffe dient, sowie sein fallender Temperaturgradient bewirken, daß die Abfall, bzw. Reststoffe von allen störenden organischen Ummantelungen auf wirtschaftliche Weise befreit werden und das in den Abfällen enthaltene Glas einer Wiederverwendung zugeführt werden kann.

Die Abfall- und/oder Reststoffe werden vorteilhaft vor dem Eintragen so zerkleinert, daß ihre größten Abmessungen (Faserlängen) im wesentlichen 30 cm nicht übersteigen. Die Auflockerung wird vor allen Dingen durch Einbauten in der Trommel vorgenommen, die sich entweder mit der Trommel oder in der feststehenden Trommel drehen. Die Trommel oder die Einbauten in der Trommel drehen sich mit 5 bis 30, vorzugsweise 8 bis 15 U/min. Das Heißgas von 250 bis 850 °C wird vorteilhaft im Gegenstrom durch die Trommel geleitet. Die Stoffe verweilen mindestens 2,5 min in der Trommel. Eine wirtschaftlich noch vertretbare Verweilzeit der Stoffe in der Trommel liegt bei 6 bis 8 min. Die Geschwindigkeit, mit der sich der Heißgasstrom in der Trommel bewegt, liegt bei 0,2 m/sec bezogen auf den mittleren freien Trommelquerschnitt und 0°C. Der Heißgasstrom wird vorteilhaft nicht nur entgegen der Drehrichtung der Trommel, sondern auch tangential und windschief zur Trommelachse am Austragende in die Trommel eingeleitet. Verfahrenstechnisch, ökologisch und energetisch günstig ist es, die die Trommel verlassenden Abgase einer Filterung und Verbrennung zu unterziehen und das dabei entstehenden heiße Gas teilweise der Trommel wieder zuzuleiten. Der Umfang der Wiederzuleitung und die Temperatur des auf diese Weise gewonnenen Heißgases sind durch eine entsprechende Frischluftzufuhr steuerbar.

Eine zur Durchführung des erfindungsgemäßen Verfahrens vorteilhafte Vorrichtung weist in der Trommel die Einbauten zum Umwälzen der Abfall- und/oder Reststoffe sowie eine Heißgaszuführvorrichtung am Austragende und eine Abgasabführvorrichtung am Eintragende der Trommel auf. Die Trommel selbst kann eine zylindrische oder konische oder eine Form haben, die aus zylindrischen und konischen Abschnitten in geeigneter Kombination miteinander besteht. Sie kann je nach dem gewählten Aufbau der Vorrichtung horizontal, vertikal oder mehr oder weniger geneigt angeordnet sein. Vorteilhaft ist die Trommel um ihre im wesentlichen horizontale geometrische Achse drehbar angeordnet. Besonders in diesem Fall sind die Einbauten als Stifte und/oder Materialstreifen aus hitzebeständigen Materialien ausgebildet, die zumindest nahezu rechtwinklig zur Innenwand der Trommel gerichtet und an dieser befestigt sind. Vorteilhaft sind dabei zwischen den Materialstreifen und der Trommelinnenwand nur punktförmige Befestigungen, im übrigen aber Spalte von 10 bis 15 mm vorgesehen, durch die kleine Faserstücke der Abfall- oder Reststoffe stets an die tiefste Stelle der Trommel rutschen können und vom Heißgasstrom kaum erfaßt werden. Dadurch ist der Abgasstrom mit kleinen Faserstücken wenig belastet.

Die zum Auflockern, Umwälzen und Transport der Abfall- und/oder Reststoffe in einer horizontalen oder geneigten Drehtrommel vorgesehenen Stifte oder Materialstreifen erfüllen ihre Funktion in besonders günstiger Weise, wenn sie mit Spitzen bzw. sägezahnartigen Spitzen versehen sind, weil sie leichter in die in der Trommel befindlichen Stoffe hinein- und aus ihnen herausgleiten. In dieser Funktion werden sie durch Abkröpfungen in Drehrichtung der Trommel unterstützt.

Die Stifte können in der Drehtrommel in Reihen entlang von Mantel-, Kreis-, Ellipsen-, oder Spirallinien an der Innenwand angeordnet sein. In gleicher Weise können die hitzebeständigen Materialstreifen (Blechstreifen) mit sagezahnartigen Anarbeitungen verlaufen. In jedem Fall ist es von Vorteil, wenn die gestreckte Höhe der Stifte oder des Materialstreifens eine Länge von 1/5 bis 1/20, vorzugsweise 1/10 des Durchmessers der Trommel, mindestens aber von 8 cm aufweist. Die Abkröpfungen liegen bei den Stiften, bis zur Hälfte der Stiftlänge vom spitzen freien Ende entfernt. Der Abkröpfungswinkel beträgt in jedem Fall 30° bis 90°, vorzugsweise 45° bis 60°. Sind die Stifte oder Sägezähne in Reihen von über den Umfang verlaufenden gekrümmten Linien in der Trommel angeordnet, so wird der Transport der in der Trommel zu bewegenden Abfall- und Reststoffe durch diese Maßnahme unterstützt. Der Abstand zweier in einer Reihe befindlicher spitzer Enden der Stifte bzw. Sägezähne beträgt 50 bis 200 mm, vorzugsweise 100 mm. Empfehlenswert ist es, zwei benachbarten, auf Mantellinien befindlichen Reihen von Stiften oder Sägezähnen einen Winkelabstand von 10° bis 45°, vorzugsweise 15° bis 20° zu geben. Der lineare Abstand zweier Reihen soll 100 mm nicht unterschreiten und 350 mm nicht überschreiten. Zum Transport feiner Abfälle ist es von Vorteil, wenn den entlang einer Reihe angeordneten Stiften ein hitzebeständiger Materialstreifen parallel und die Stifte berührend zugeordnet ist, dessen Höhe bei 1/2 bis 2/3 der Stiftlänge liegt.

Sind die Abfälle langfasrig, so können die Stiftreihen über die gesamte Länge der Trommel angeordnet sein. Bei kurzfasrigen Abfällen, z.B. bei Glaswolleabfällen, ist es von Vorteil, wenn auf der Seite des Eintragendes gekröpfte Stifte und auf der Seite des Austragendes gekröpfte, hitzebeständige Materialstreifen, z.B. Bleche, zum Umwälzen und Transport der Abfälle vorgesehen sind. Die gekröpften Stifte nehmen dann etwa 1/3 und die gekröpften Bleche etwa 2/3 der Trommellänge ein. Die Kröpfungen der Stifte können 45° und die der Materialstreifen 60° betragen. Generell können die Kröpfungswinkel der Stifte und Materialstreifen den zu behandelnden Stoffen angepaßt und innerhalb einer Trommel unterschiedlich gehalten werden. Gegebenenfalls sind zumindest tlw. keine Kröpfungen erforderlich.

Der Durchmesser der Trommel sollte unter Berücksichtigung der erforderlichen Fallhöhen für die zu behandelnden Stoffe mindestens 0,8 m sein. Im Sinne der Wirtschaftlichkeit kann als eine obere Grenze des Durchmessers 2,0 m angesehen werden. Für den Transport ist es von Vorteil, wenn die Trommel eine geringe Neigung vom Eintragende zum Austragende abwärts besitzt. Sie sollte 10° nicht übersteigen. Die Abfall- und/oder Reststoffe können aber auch ein gegenüber dem Eintragende aufsteigendes Austragende notwendig machen. Das ist besonders dann der Fall, wenn eine Reinigung des Umluftstroms (Abgas-Heißgas) durch die Stoffe selbst verstärkt erfolgen soll. Zur Wärmeisolierung ist die Trommel an ihrer Außenfläche mit einem Isoliermantel versehen.

Damit die Abfall- und/oder Reststoffe schon beim Einfüllen in die gewünschte Richtung gedrückt werden und ein Materialstau vermieden wird, sind am Eintragende der Trommmel an der Innenwand Leitschaufeln angebracht. Mit ihnen werden die Stoffe in das Innere der Drehtrommel gefördert und ihr Zurückgleiten oder Herausfallen verhindert. Um den Austrag von in den Abfall- und Reststoffen enthaltenem Feinkorn mit dem Abgasstrom zu vermeiden, ist am Eintragende vorteilhaft ein Flusensieb angebracht. An der vorzugsweise zentral angeordneten und durch das Flusensieb in die Drehtrommel hineinragenden Eintragvorrichtung ist ein Abstreifer vorgesehen, mit dem der Anflug auf das Flusensieb bei jeder Umdrehung der Trommel um ihre geometrische Achse abgestreift wird. Die Länge der Trommel ist an sich beliebig; aus wirtschaftlichen und funktionellen Gründen wird sie jedoch nicht kleiner als 1,5 m und nicht größer als 10,0 m sein.

Vorteilhaft ist der Trommel eine Brennkammer zugeordnet, die gleichzeitig zur Heißgaserzeugung und zur Nachverbrennung des mit Verdampfungs- und Schwelprodukten der organischen Überzuge beladenen Abgases aus der Trommel dient. Zwischen der Trommel und der Nachverbrennungskammer ist eine Abgasleitung mit einem Filter vorgesehen.

Weitere Merkmale der Erfindung sind den nachfolgenden Ausführungsbeispielen entnehmbar, die anhand der schematischen Zeichnung näher erläutert werden. Es zeigen:
- Fig. 1: eine erfindungsgemäße Trommel in einem die geometrische Achse enthaltenden Längsschnitt,
- Fig. 2: einen Querschnitt entlang der Linie A-A in Fig. 1,
- Fig. 3: einen Querschnitt entlang der Linie B-B in Fig. 1,
- Fig. 4: einen Teil eines gekröpften Blechstreifens in Ansicht,
- Fig. 5: den gekröpften Blechstreifen im Schnitt entlang der Linie C-C in Fig. 4,
- Fig. 6: einen Teil einer Stiftreihe,
- Fig. 7: einen Schnitt entlang der Linie D-D in Fig. 6,
- Fig. 8: das Schema einer Drehtrommel kombiniert mit einer als Heißgaserzeuger und Abgasnachverbrennung wirkenden Brennkammer,
- Fig. 9: eine vertikal angeordnete erfindungsgemäße Trommel und
- Fig. 10: ein Rührer- oder Abschieberarmpaar in Draufsicht.

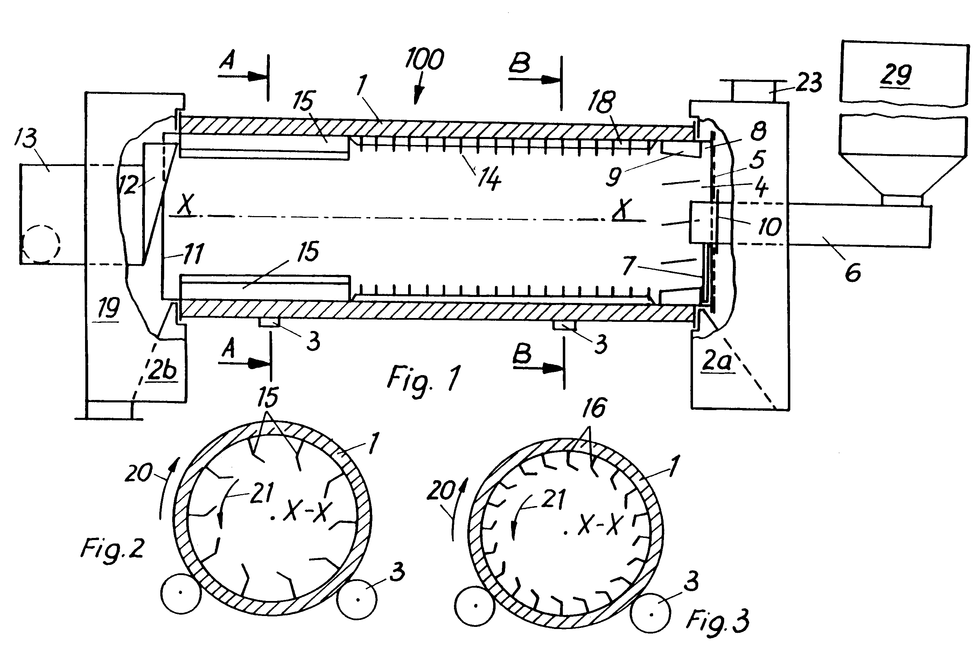

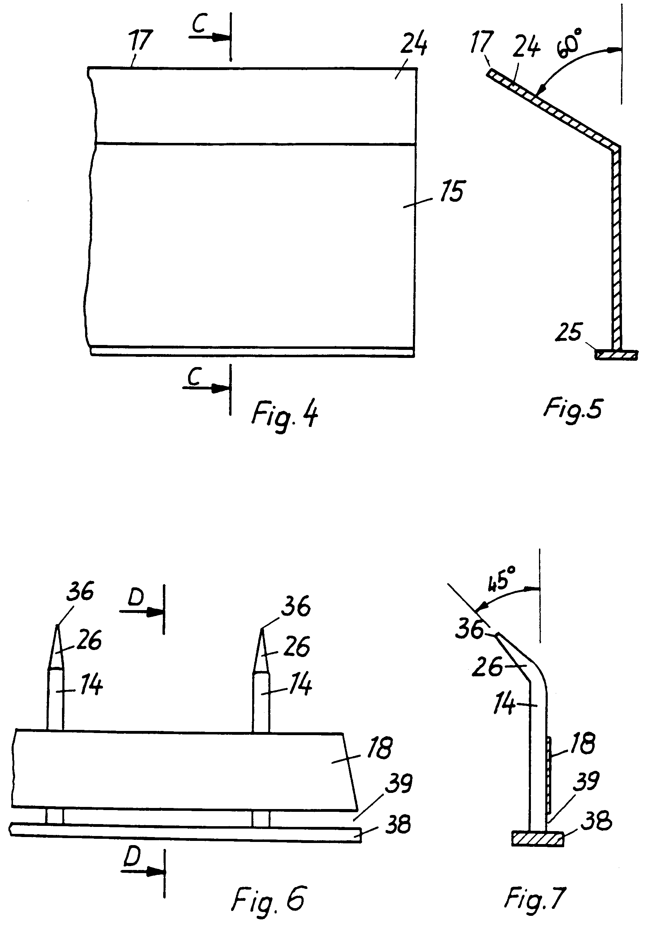

In Fig. 1 ist eine Drehtrommel 1 einer erfindungsgemäßen Vorrichtung 100 mit einer Neigung von 3° auf Lagern 3 um eine Achse X-X drehbar zwischen Anschlußköpfen 2a und 2b gelagert. Das eintragseitige Ende 4 der Drehtrommel 1 ist mit einem Flusensieb 5 versehen, durch das eine Eintragvorrichtung 6 etwa 0,1 m in die Drehtrommel 1 hineinragt. Auf die Eintragvorrichtung 6 ist ein Abstreifer 7 für das Flusensieb 5 montiert. Im Abstand 8 vom eintragseitigen Ende 4 der Drehtrommel 1 sind an der Trommelinnenwand Leitschaufeln 9 befestigt. Zur Abdichtung des Flusensiebs 5 ist auf der Eintragvorrichtung 6 ein Dichtring 10 angebracht. Dem Eintragende 4 liegt ein Austragende 11 gegenüber, in das eine Heißgasdüse 12 einer Heißgaszuführvorrichtung 13 so hineinragt, daß der die Düse 12 verlassende Heißgasstrom tangential und schräg zur Innenwand in die Drehtrommel 1 hinein gerichtet ist. Die Drehtrommel 1 ist auf der Seite des Eintragendes 4 über etwa 1/3 seiner Länge mit gekröpften Stiften 14 versehen, die in Reihen angeordnet sind, welche parallel zu den Mantellinien und zur Drehachse X-X der Drehtrommel 1 verlaufen. Auf der Seite des Austragendes 11 sind in der Drehtrommel 1 ebenfalls parallel zu ihren Mantellinien gerichtete gekröpfte Blechstreifen 15 vorgesehen, die sich über etwa 2/3 der Drehtrommellänge erstrecken. Die Bereiche der gekröpften Stifte 14 und gekröpften Blechstreifen 15 schließen sich aneinander an, jedoch befinden sich die gekröpften Blechstreifen 15 entlang des Umfangs in einem größeren Abstand voneinander als die Reihen der gekröpften Stifte 14. Mit anderen Worten sind über den Umfang der Drehtrommel 1 mehr Stiftreihen 16 angeordnet als Blechstreifen 15. Jeder Stiftreihe 16 ist außerdem ein Blechstreifen 18 ohne Kröpfung parallel zugeordnet, der mit den Stiften dieser Reihe verbunden ist. Heißgasdüse 12 und Heißgaszuführvorrichtung 13 sind so ausgebildet und angeordnet, daß am Austragende 11 ein genügend großer Raum 19 für den Austrag der thermisch behandelten Abfälle vorhanden ist. Die Drehtrommel 1 dreht sich um die Achse X-X in einer durch einen Pfeil 20 in Fig. 2 bzw. 3 angegebenen Richtung. Der Heißgasstrom der Düse 12 ist in den Figuren 2 und 3 durch einen Pfeil 21 gekennzeichnet und der Drehrichtung 20 entgegengesetzt. Die Kröpfungen der Stifte 14 und Blechstreifen 15 liegen in Drehrichtung 20.

Durch die Eintragvorrichtung 6 werden Abfälle (bspw. Glaswolle) 22 in die Drehtrommel 1 eingegeben. Die Zuordnung der Eintragvorrichtung 6 zum Eintragende 4 der Drehtrommel 1 ist so getroffen, daß die Abfall- und/oder Reststoffe 22 beim Eintrag auf die Leitschaufeln 9 fallen und in Verbindung mit dem Flusensieb 5 daran gehindert werden, aus dem Eintragende 4 herauszufallen. Sie werden durch die Leitschaufeln 9 veranlaßt, sich zum Inneren der Drehtrommel 1 zu bewegen. Der Durchmesser der Drehtrommel 1 soll 1 m und ihre Länge 3 m betragen. Infolge der Neigung der Drehtrommel 1 und ihrer Drehgeschwindigkeit von etwa 10 U/min bewegen sich die Abfälle in ca. 5 min zum Austragende 11. Dabei werden sie durch die gekröpften Stifte 14 und die gekröpften Blechstreifen 15 erfaßt, in Drehrichtung nach oben mitgenommen und aus ihrer höchstmöglichen Lage abgeworfen. Feinere Bestandteile der Abfälle 22 werden zunächst durch die Blechstreifen 18 und später durch die gekröpften Blechstreifen 15 in gleicher Weise behandelt. Dadurch umspült der von der Heißgasdüse 12 ausgehende Heißgasstrom die gesamte Oberfläche der Abfälle 22 und entfernt die dort befindlichen organischen Bestandteile. Die Abgase werden durch ein Rohr 23 abgeführt. Die thermisch behandelten Abfälle verlassen die Drehtrommel 1 am Austragende 11.

Das Ausführungsbeispiel der Figuren 1 bis 3 geht davon aus, daß kurzfasrige Abfälle (kleiner 5 cm) aufbereitet werden sollen. Werden langfasrige Abfälle (größer 5 cm) aufbereitet, so können an die Stelle der gekröpften Materialstreifen 15 durchweg gekröpfte Stifte 14 treten und ggf. die Blechstreifen 18 weggelassen oder nur auf der Austragseite 11 verwendet werden. Es ist auch möglich, die hitzebeständigen Materialstreifen 15 und/oder die Stiftreihen 16 nicht entlang von Mantellinien, sondern entlang von gekrümmten Linien an der Innenfläche der Drehtrommel 1 anzubringen.

In den Figuren 4 und 5 ist ein Teil eines hitzebeständigen Materialstreifens 15 dargestellt, der eine Abkröpfung 24 von 60° aufweist. Dieser Materialstreifen 15 ist mit einem Fuß 25 versehen, mit dem er an der Innenwand der Drehtrommel 1 befestigt wird. Die Abkröpfung 24 liegt bei etwa 2/3 der Höhe des Materialstreifens 15 bzw. 1/3 der Höhe des Materialstreifens 15 von dessen Spitze 17 entfernt.

Die Figuren 6 und 7 zeigen eine Stiftreihe 16, die mit einem Fuß 38 an der Innenwand der Drehtrommel 1 befestigt werden und deren oberes Drittel eine Abkröpfung 26 von 45° aufweist. Die Abkröpfungen 26 haben freie spitze Enden 36, so daß beim Eingriff dieser Spitzen 36 und Abkröpfungen 26 in die Abfälle 22 sie eine geringe verdrängende, vielmehr eine aufspießende Wirkung ausüben, die durch den gegenläufigen Heißgasstrom noch unterstützt wird. Parallel zu den Stiften 14 und mit diesen verbunden ist ein Blechstreifen 18 in einem Abstand vom Fuß 38 (oder der Innenwand) angeordnet, so daß sich über die gesamte Länge des Blechstreifens 18 zwischen ihm und dem Fuß 38 (oder der Innenwand der Drehtrommel) ein Spalt 39 von 1 bis 1,5 cm Höhe ausbildet.

Anstelle der Spitzen 17, 36 können auch geeignete Rundungen vorgesehen sein, die dem Gleiten der Abfälle 22 über die Bleche 15 bzw. Stifte 14 förderlich sind.

Anstelle der getrennten Stifte 14 und Blechstreifen 18 können breitere Blechstreifen 15 verwendet werden, an die den Stiften 14 entsprechende sägezahnartige und gekröpfte Spitzen bis zur halben Höhe des breiteren Blechstreifens angearbeitet sind.

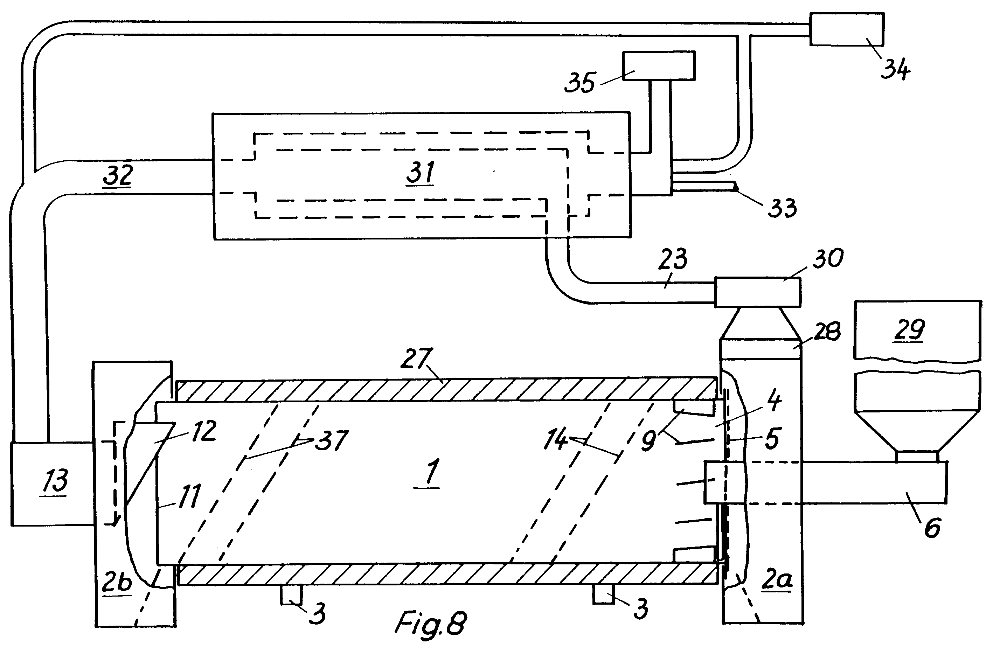

In Fig. 8 ist eine Drehtrommel 1 mit einem Eintragende 4, einem Flusensieb 5, Leitschaufeln 9 und einem Austragende 11 in Lagern 3 drehbar gelagert und mit einem Isoliermantel 27 versehen. Die Trommel 1 weist an ihrer Innenfläche entlang von Spirallinien 37 angeordnete gekröpfte, mit Spitzen versehene Stifte 14 auf. Zwei aufeinanderfolgende Stifte haben einen Abstand von 100 mm, der lineare Abstand zweier benachbarter Spirallinien 37 beträgt etwa 200 mm. Der am Austragende 11 befindliche Anschlußkopf 2b enthält gleichzeitig die Heißgaszuführung 13 mit der Heißgasdüse 12. Der am Eintragende befindliche Anschlußkopf 2a besitzt ein Filter 28 und einen dazugehörigen Rohranschluß 23 für das Abgas. Außerdem ist am Anschlußkopf 2a eine Eintragvorrichtung 6 mit Eintragschnecke oder vibrierender Rutsche (nicht dargestellt) angeordnet, die mit einem Bunker 29 in Verbindung steht. Durch die Eintragvorrichtung 6 werden die bspw. langfasrigen Abfälle aus dem Bunker 29 in die Trommel 1 eingetragen. In der Rohrleitung 23 befindet sich ein Abgasventilator 30, über den die Rohrleitung zu einer Brennkammer 31 führt, die gleichzeitig zur Heißgaserzeugung und Abgasnachverbrennung dient. Der Abgasventilator 30 saugt das durch das Filter 28 mechanisch gereinigte Abgas vom Eintragende 4 der Trommel 1 an und fördert es zur Abgasverbrennung in die Brennkammer 31. Über einen weiteren Rohranschluß 32 ist die Brennkammer 31 mit der Heißgaszuführung 13 an der Trommel 1 verbunden. Außerdem weist die Brennkammer 31 einen Gasanschluß 33 zur Zuführung des Verbrennungsgases, einen Verbrennungsluftventilator 34 zum dosierbaren Ansaugen der zur Verbrennung des Gases erforderlichen Frischluft (Außenluft) und einen Abgasventilator 35 auf, der den nicht zur Heißgaszuführung 13 gelangenden Teil des nachverbrannten Abgases absaugt. Die Brennkammer 31 dient der Erzeugung des Heißgases, das über den Rohranschluß 32, die Heißgaszuführung 13 und die Heißgasdüse 12 der Trommell zugeführt wird. Die Trommel 1 wird mit etwa 10 U/min gedreht. Das Heißgas wird im Betriebszustand mit etwa 0,8 m/sec entgegen der Drehrichtung der Trommel 1 und der Bewegungsrichtung der zu behandellnden Stoffe zugeführt und weist am Austragende 1 eine Temperatur von etwa 800°C auf. Die Abfälle verweilen ca. 6 min in der Trommel 1. Die die Trommel 1 durchlaufenden Abfälle werden vollständig von ihren organischen Bestandteilen befreit. Die Abgase aus der Trommel 1 durchströmen das Filter 28 und gelangen gereinigt durch das Filter 28 und das Rohr 23 zur Brennkammer 31, in der sie nachverbrannt mit zur fleißgaserzeugung benutzt werden.

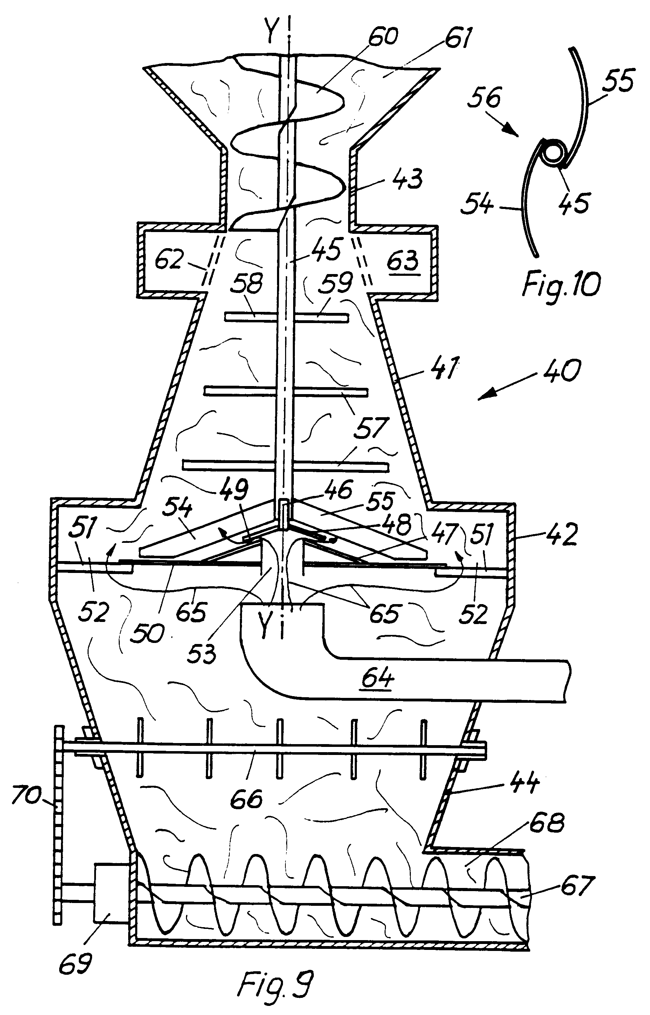

In den Figuren 1 bis 8 ist eine im wesentlichen horizontal angeordnete, zylindrische Drehtrommel 1 mit an ihrer Innenwand vorgesehenen Einbauten in Form von Stiften 14 und Materialstreifen 15 vorausgesetzt worden. Die folgenden Figuren 9 und 10 basieren auf einer fest angeordneten vertikalen Trommel 40 die einen konischen Teil 41 und einen ausladenden zylindrischen Teil 42 besitzt und auf die ein trichterförmiges Gehäuse 43 aufgesetzt ist. Die Trommel 40 ist auf einem Grundgehäuse 44 befestigt, dessen Konusform der der Trommel 40 entgegengerichtet ist. Die Trommel 40 und die Gehäuse 43, 44 sind im wesentlichen rotationssymmetrisch zu einer gemeinsamen Achse Y-Y ausgebildet und angeordnet, die gleichzeitig die Drehachse einer Welle 45 ist. Die Welle 45 ist mit ihrem unteren Ende durch einen Zapfen 46 geführt; am oberen Ende der Welle 45 befindet sich ihr Antrieb und eine Lagerstelle, die beide nicht dargestellt sind. Der Zapfen 46 wird von einem zweiteiligen Konus 47, 48 getragen, dessen Oberteil 48 das Unterteil 47 dachförmig übergreift und an diesem punktuell befestigt ist, so daß genügend große Durchtrittsöffnungen 49 zwischen den beiden Konusteilen 47, 48 entstehen. Das Unterteil 47 ist am Boden 50 der Trommel 40 befestigt, der seinerseits über einen Kranz von Haltestegen 51, von denen nur zwei sichtbar sind, mit der Trommelwandung starr so verbunden ist, daß genügend große Ausnehmungen 52 in der Grundfläche der Trommel 40 entstehen. Der Boden 50 weist auch in seinem Zentrum eine Ausnehmung 53 auf.

Die Welle 45 ist an ihrem unteren Ende, im zylindrischen Teil 42, mit einem zwei Arme 54, 55 besitzenden Abschieber 56 (Fig. 10) sowie im konischen Teil 41 einem dreistöckigen Rührer 57 mit mindestens zwei angepaßt langen Rührarmen 58, 59 in jedem Stockwerk versehen. Die Rührarme 58, 59 können ebenso wie die Schieberarme 54, 55 gerade oder wie in Fig. 10 dargestellt gekrümmt und/oder verwunden gestaltet sein. Sie können auch, ebenso wie die Schieberarme 54, 55, zur Welle 45 geneigt angeordnet sein. Im Bereich des Trichters 43 ist die Welle 45 von einer mit ihr starr verbundenen Förderschnecke 60 umgeben, die Abfall- und/oder Reststoffe 61 in die Trommel 40 befördert.

Die Trommel 40 besitzt an ihrem Eintragende Öffnungen 62 zum Anschluß eines Abgaskanals 63. An ihrem Austragende endet ein in das Grundgehäuse 44 hineinragender Heißgaskanal 64, von dem Heißgas 65 durch die Ausnehmungen 52, 53 im Boden 50 in die Trommel 40 gelangt.

Im Grundgehäuse 44 ist eine Auflockerungsvorrichtung 66 und am Boden 50 eine Austragschnecke 67 drehbar gelagert, die in einen Kanal 68 hineinragt, der mit einem nicht dargestellten Auffangbehälter in Verbindung steht. Ein Antrieb 69 betreibt die Drehung der Austragschnecke 67 und über ein Getriebe 70 die Drehung der Auflockerungsvorrichtung 66.

Die Förderschnecke 60 trägt mit organischen Bestandteilen beschichtete Glasfasern 61 in die Trommel 40 ein, die durch den dreistöckigen Rührer 57 umgewälzt und aufgelockert werden, der sich mit einer Frequenz von ca. 15 U/min dreht. Die Glasfasern 61 verweilen etwa 8 min in der Trommel 40, die am Eintragende einen Durchmesser von 40 cm und am Austragende einen Durchmesser von 120 cm aufweist. Der Heißgasstrom 65 mit etwa 800°C wird durch den Kanal 64 so zugeführt, daß er die aufgelockerten Stoffe mit ca. 0,2 m/sec durchströmt und die enthaltenen organischen Bestandteile der Beschichtung bis auf weniger als 0,2% entfernt. Die derart entschlichteden Stoffe 61 werden vom Abschieber 56 durch die Ausnehmungen 52, 53 in das Grundgehäuse 44 befördert und von dort mit Hilfe der Austragschnecke 67 in einen nicht dargestellten Auffangbehälter ausgetragen. Die in der Trommel 40 entstandenen Abgase werden als wesentlich kühlere Gase mit etwa 200°C durch den Abgaskanal 63, ähnlich wie in Fig. 8, einer Behandlung zugeführt und gelangen teilweise als Heißgase 65, mit Luft versetzt, durch den Kanal 64 wieder in den Prozeß.

Die Erfindung ist nicht auf die dargestellten Ausführungsbeispiele beschränkt. So ist es möglich, die Trommel 1 in einer größeren Schräglage zu verwenden, sie mit zylindrischen und konischen Abschnitten zu versehen und sie nur konisch auszubilden, wobei sie parallel zu einer Mantellinie gelagert ist. Der Eintrag 6 muß nicht zentral, sondern kann in der unteren Hälfte der Trommel 1 erfolgen. Die Abkröpfungen der Stifte in einer Reihe 15 können variieren. Die Trommel 40 kann auch nur zylindrisch oder konisch gestaltet sein, wobei die Armlängen des Rührers 57 diesem Sachverhalt anzupassen sind. Der Trommelboden 50 kann flach und ohne die Konusteile 47, 48 ausgebildet sein. In diesem Fall entfällt die zentrale Ausnehmung 53. Ebenso könnten, den einzelnen Stockwerken des Rührers 57 angepaßt, jeweils unmittelbar unter dem entsprechenden Armpaar 58, 59 Rückhaltevorrichtungen angeordnet sein, auf denen die Abfall- und/oder Reststoffe zum Verweilen gezwungen wären und von denen sie mit Hilfe der Rührarme in das nächst tiefere Stockwerk bzw. auf den Boden der Trommel 40 und von dort in das Grundgehäuse 44 befördert werden würden. Die dem Boden 50 zugewandte Öffnung des Heißgaskanals 64 kann abweichend von Fig. 9 aus mehreren über eine größere Fläche verteilten Düsen bestehen, die darüberhinaus unterschiedliche Strahlrichtungen haben können. Die Auflockerungsvorrichtung 66 kann auch aus einzelnen im Grundgehäuse 44 nur in der Nähe der Wandung angeordneten Rührern bestehen. Das Grundgehäuse 44 ist nicht an die dargestellte Konusform gebunden. Im Bedarfsfall kann es eine quaderförmige, zylindrische oder sich nach unten erweiternde Gestalt aufweisen. Es ist auch möglich, anstelle nur einer Austragschnecke 67 mehrere zu verwenden. Die Einführung der beschichteten Abfall- und/oder Reststoffe (Glasfasern 61) ist nicht an eine vertikale Förderschnekke 60 gebunden. Diese kann horizontal gerichtet oder gar nicht vorhanden sein; im letzteren Fall würde die Schwerkraft zur Zuführung der Abfall- und/oder Reststoffe 61 ausreichen. Die Anzahl der Rührarme 58, 59 sowie ihr Abstand voneinander und von der Wandung der Trommel 40 kann in Abhängigkeit von den zu behandelnden Stoffen unterschiedlich sein. Weiterhin sind erfindungsgemäße Kombinationen der in den einzelnen Ausführungsbeispielen enthaltenen Merkmale möglich.

## Patentansprüche

1. Verfahren zur thermischen Behandlung von Abfall- und/oder Reststoffen, insbesondere von Glasseide, Glasfasern, Glaswolle und Glasvlies, die Überzüge aus organischen Materialien aufweisen und in einer Trommel vom Eintragende zum Austragende bewegt und auf eine Temperatur erhitzt werden, die mindestens gleich der Schweltemperatur bzw. Verdampfungstemperatur der Überzüge ist und unter der Erweichungstemperatur der Abfall- und/oder Reststoffe liegt, dadurch gekennzeichnet, daß die Abfall- und/oder Reststoffe (22, 61) in der Trommel (1, 40) vom Eintragende (6) zum Austragende (11) ständig, vorzugsweise zunehmend aufgelockert werden, so daß am Austragende (11) der vollständige Abbrand der Reste der organischen Bestandteile der Abfall- und/oder Reststoffe (22, 61) beendet wird und bis zum Eintragende (6) eine Vorreinigung des Abgasstromes von kleinen Stücken der Abfall- und/oder Reststoffe (22, 61) erfolgt, und daß die Abfall- und/oder Reststoffe (22, 61) allein von einem Heißgasstrom (65) erhirzt werden, der in der Trommel (1, 40) vom Austragende (11) zum Eintragende (6) strömt.

2. Verfahren gemäß Anspruch 1., dadurch gekennzeichnet, daß die Abfall- und/oder Reststoffe (22, 61) vor dem thermischen Behandeln so zerkleinert werden, daß ihre größten Abmessungen im wesentlichen 30 cm nicht übersteigen.

3. Verfahren gemäß Anspruch 2., dadurch gekennzeichnet, daß die Auflockerung durch Drehen der mit Einbauten (14, 15) versehenen Trommel (1) vorgenommen wird.

4. Verfahren gemäß Anspruch 2., dadurch gekennzeichnet, daß die Auflockerung durch sich drehende Einbauten (45, 56, 57) in der feststehenden Trommel (40) vorgenommen wird.

5. Verfahren gemäß Anspruch 3. oder 4., dadurch gekennzeichnet, daß die Einbauten (14, 15, 45, 56, 57) sich mit 5 bis 30, vorzugsweise 8 bis 15 Umdrehungen pro Minute drehen.

6. Verfahren gemäß Anspruch 5., dadurch gekennzeichnet, daß der Heißgasstrom (65) eine Temperatur von 250 bis 850°C aufweist und entgegen der Drehrichtung der Einbauten (14, 15, 45, 56, 57) windschief zur Trommelachse (X-X) eingeleitet wird.

7. Verfahren gemäß Anspruch 6., dadurch gekennzeichnet, daß die Geschwindigkeit des Heißgasstroms (65) bezogen aufden mittleren freien Trommelquerschnitt und 0°C 0,2 m/sec nicht wesentlich übersteigt.

8. Verfahren gemaß Anspruch 7., dadurch gekennzeichnet, daß die Abfall- und/oder Reststoffe (22, 61) mindestens 2,5 min in der Trommel (1, 40) verweilen.

9. Verfahren gemäß mindestens einem der vorstehenden Ansprüche, dadurch gekennzeichnet, daß die die Trommel (1, 40) verlassenden Abgase einer Filterung und Verbrennung unterzogen werden und das dabei entstehende heiße Gas (65) zumindest teilweise in die Trommel (1, 40) zurückgeleitet wird.

10. Vorrichtung bestehend aus einer im wesentlichen horizontal angeordneten Trommel mit im wesentlichen rechtwinklig zur Trommelinnenwand gerichteten hitzebeständigen Einbauten zum Auflockern, Umwälzen und Transport der Abfall- und/oder Reststoffe, wobei die Trommel am Austragende eine Heißgaszuführvorrichtung und am Eintragende eine Abgasabführvorrichtung aufweist, zur Durchführung des Verfahrens gemäß den Ansprüchen 1 bis 9, dadurch gekennzeichnet, daß die Einbauten (14, 15) zumindest teilweise als Stifte oder Sägezähne (14) mit spitzen oder abgerundeten freien Enden (36) ausgebildet sind, die eine radiale Höhe von 1/5 bis 1/20 des Durchmessers der Trommel (1) aufweisen.

11. Vorrichtung gemäß Anspruch 10., dadurch gekennzeichnet, daß die Höhen der Stifte oder Sägezähne (14) 1/10 des Durchmessers der Trommel (1), mindestens aber 8 cm betragen.

12. Vorrichtung gemäß Anspruch 10 oder 11, dadurch gekennzeichnet, daß die Stifte oder Sägezähne (14) sich auf oder an Materialstreifen (15, 18) befinden, die 1/2 bis 2/3 der Stift- oder Sägezahnhöhe einnehmen.

13. Vorrichtung gemäß mindestens einem der Ansprüche 9. bis 12., dadurch gekennzeichnet, daß die Stifte oder Sägezähne (14) im wesentlichen in Reihen (16) entlang von Mantellinien oder gekrümmten Linien in der Trommel (1) angeordnet sind.

14. Vorrichtung gemäß mindestens einem der Ansprüche 10. bis 13., dadurch gekennzeichnet, daß die Stifte oder Sägezähne (14) mit ihren freien Enden in Drehrichtung abgekröpft sind, daß die Abkröpfungen von ihren Spitzen (36) bis zur Hälfte der Höhen der Stifte oder Sägezähne (14) reichen und daß die Abkröpfungswinkel 30° bis 90° vorzugsweise 45° betragen.

15. Vorrichtung gemäß Ansprch 12., dadurch gekennzeichnet, daß zwischen den Materialstreifen (15, 18) und der Trommelinnenwand ein Spalt (39) besteht.

16. Vorrichtung gemäß Anspruch 13., dadurch gekennzeichnet, daß der Abstand zweier, in einer Reihe (16) befindlicher Spitzen (36) 50 bis 200 mm, vorzugsweise 100 mm beträgt.

17. Vorrichtung gemaß Anspruch 13., dadurch gekennzeichnet, daß der Winkelabstand zweier benachbarter Reihen (16) bzgl. des Trommelumfangs 10 bis 45°, vorzugsweise 15 bis 30° betragt.

18. Vorrichtung gemäß Anspruch 16., dadurch gekennzeichnet, daß der lineare Abstand zweier benachbarter Reihen (16) 100 bis 350 mm beträgt.

19. Vorrichtung gemäß mindestens einem der vorstehenden Ansprüche, dadurch gekennzeichnet, daß auf der Seite des Eintragendes (4) gekröpfte Stifte oder Sägezähne (14) und auf der Seite des Austragendes (11) Materialstreifen (15) zum Auflockern, Umwälzen und Transport der Abfall- und/oder Reststoffe (22, 61) vorgesehen sind.

20. Vorrichtung gemäß Anspruch 14., dadurch gekennzeichnet, daß die Kröpfungswinkel der Stifte (14) und/oder Materialstreifen (15) in einer Trommel (1) unterschiedlich sind.

21. Vorrichtung gemäß mindestens einem der Ansprüche 10. bis 20., dadurch gekennzeichnet, daß der Trommeldurchmesser 0,8 bis 2 m und die Trommellänge 1,5 bis 10 m beträgt.

22. Vorrichtung gemäß Anspruch 10., dadurch gekennzeichnet, daß am Eintragende (4) der Trommel (1) an der Innenwand Leitschaufeln (9) angebracht sind.

23. Vorrichtung gemäß Anspruch 10. oder 22., dadurch gekennzeichnet, daß das Eintragende (4) der Trommel (1) durch ein starr mit der Trommel (1) verbundenes Flusensieb (5) verschlossen ist, durch das eine Eintragvorrichtung (6) axial in die Trommel (1) hineinragt, und daß sich an der Innenseite des Flusensiebs (5) ein mit der Eintragvorrichtung (6) verbundener Abstreifer (7) befindet.

24. Vorrichtung bestehend aus einer im wesentlichen vertikal angeordneten Trommel mit einem oben befindlichen Eintragende und einem unten befindlichen Austragende, Einbauten zum Auflockern, Umwälzen und Transport der Abfall- und/oder Reststoffe, die sich in mindestens zwei Etagen übereinander befinden, einer Heißgaszuführvorrichtung am Austragende sowie einer Abgasabführvorrichtung am Eintragende, zur Durchführung des Verfahrens gemäß den Ansprüchen 1. bis 9., dadurch gekennzeichnet, daß die Trommel (40) konisch mit vom Eintragende (43) zum Austragende (51) zunehmendem Durchmesser gestaltet ist und daß in den einzelnen Etagen Abschiebe- oder Rührarme (54, 55, 58, 59) vorgesehen sind, deren Lange von Etage zu Etage zunimmt.

25. Vorrichtung gemäß Anspruch 24., dadurch gekennzeichnet, daß ein Boden (50) am Austragende vorgesehen ist, der zur geometrischen Achse (Y-Y) hin vorzugsweise konisch aufgwölbt ist, und daß am Boden (50) ein mehrstöckiger Rührer (57) gelagert ist, an dem die Abschiebe- oder Ruhrarme (54, 55, 58, 59) befestigt sind.

26. Vorrichtung gemäß Anspruch 25., dadurch gekennzeichnet, daß die Rührer- und/oder Abschieberarme (58, 59, 54, 55) gekrümmt und/oder abgeschrägt sind.

27. Vorrichtung gemäß mindestens einem der Ansprüche 10. und 24., dadurch gekennzeichnet, daß die Trommel (1, 40) an ihrer Außenfläche mit einem Isoliermantel (27) versehen ist.

28. Vorrichtung gemäß mindestens einem der Ansprüche 10. und 24., dadurch gekennzeichnet, daß der Trommel (1, 40) eine Brennkammer (31) nachgeordnet ist, die sowohl mit dem Eintragende (4, 43) als auch mit dem Austragende (11, 51) der Trommel (1, 40) in Verbindung steht.

## Claims

1. Method for thermal treatment of waste and/or residual materials, particularly glass silk, fiber glass, glass wool, having coats of organic materials and being moved in a drum from the charging end portion to the discharging end portion and being heated to a temperature at least equal to the carbonization temperature and to the evaporation temperature, respectively, of the coats and falling short of the fusing temperature of the waste and/or residual materials, characterized in that said waste and/or residual materials (22, 61) in said drum (1, 40) from said charging end portion (6) to said discharging end portion (11) are continuously and preferably increasingly disintegrated so that by said discharging end portion (11) the complete combustion of the remainders from the organic components of said waste and /or residual materials (22, 61) is accomplished and in that a preliminary purification from small particles in said waste and/or residual materials (22, 61) is carried out in direction of said charging end portion (6), and in that said waste and/or residual materials (22, 61) are only heated by a hot gas stream (65) flowing within the drum (1, 40) from said discharging end portion (11) to said charging end portion (6).

2. Method as claimed in claim 1, characterized in that said waste and/or residual materials (22, 61) are size reduced before thermal treatment in such a manner that the largest dimensions substantially do not exceed 30 cm.

3. Method as claimed in claim 2, characterized in that the disintegration is achieved by rotating the drum (1) provided with installations (14, 15).

4. Method as claimed in claim 2, characterized in that the disintegration is achieved by rotating installations (45, 56, 57) relative to the non-rotating drum (40).

5. Method as claimed in claim 3 or 4, characterized in that the installations (14,15, 45, 56, 57) rotate at 5 to 30, preferably 8 to 15 rotations per minute.

6. Method as claimed in claim 5, characterized in that the hot gas stream (65) has a temperature of 250° to 850°C and is fed in in opposition to the direction of rotation of the installations (14, 15, 45, 56, 57) askent to the drum axis X - X.

7. Method as claimed in claim 6, characterized in that the speed of the hot gas stream (65), related to the mean free drum cross section and 0°C, does not substantially exceed 0.2 m/sec.

8. Method as claimed in claim 7, characterized in that said waste and/or residual materials (22, 61) remain for at least 2.5 min in the drum (1, 40).

9. Method as claimed in at least one of the preceding claims, characterized in that the exhaust gases leaving said drum (1, 40) are subject to a filtering and burning and in that the hot gases (65) resulting thereby are at least partially returned into said drum (1, 40).

10. A device for carrying out the method as claimed in claims 1 to 9, comprising a substantially horizontally extending drum including, substantially at right angles to the interior wall of the drum, heatproof installations for disintegrating, revolving, and transporting waste and/or residual materials, the drum being provided with a hot gas feeding device at the discharging end portion and an exhaust gas duct at the charging end portion, characterized in that the installations (14, 15) are embodied at least partially as pins or saw teeth (14) having pointed or cambered free end portions (36), having a radial height of one filth up to one twentieth of the drum (1) diameter.

11. Device as claimed in claim 10, wherein the height of the pins or sawteeth (14) is about one tenth of the drum (1) diameter, however, at least 8 cm.

12. Device as claimed in claim 10 or 11, wherein the pins or sawteeth (14) are provided upon or at material stripes (15, 18) which occupy a half to two third of the height of the pins or the sawteeth.

13. Device as claimed in at least one of the claims 9 to 12, wherein the pins or sawteeth (14) are substantially arranged in rows coinciding with surface lines or curved lines in the drum (1).

14. Device as claimed in at least one of the claims 10 to13, wherein the free end portions of the pins or sawteeth (14) are offset in the direction of rotation, the offests extend from the tips (36) to half the height of the pins or sawteeth (14) and wherein the offset angles are 30° to 90°, preferably 45°.

15. Device as claimed in claim 12, wherein an interstice (39) is provided between the material stripes (15, 18) and the interior wall of the drum.

16. Device as claimed in claim 13, wherein the space between two adjacent pins (36) in one row (16) is 50 to 200 mm, preferably 100 mm.

17. Device as claimed in claim 13, wherein the angular distance between two adjacent rows (16) relative to the circumference of the drum is 10° to 45°, preferably 15° to 30°.

18. Device as claimed in claim 16, wherein the linear distance between two adjacent rows (16) is 100 mm to 350mm.

19. Device as claimed in at least one of the preceding claims, wherein on the charging end portion (4) offset pins or sawteeth (14) are provided and on the discharge end portion (11) material stripes (15) for disintegrating, revolving and transporting said waste and/or residual materials (22, 61).

20. Device as claimed in claim14, wherein the offset angles of the pins (14) and/ or of the material stripes vary in a drum (1).

21. Device as claimed in at least one of the claims 10 to 20, wherein the diameter of the drum is 0.8 m to 2 m and the length of the drum is 1.5 m to 10 m.

22. Device as claimed in claim 10, wherein guide paddles (9) are provided on the interior wall of the drum (1) at the charging end portion (4).

23. Device as claimed in claim 10 or 22, wherein the charging end portion (4) of the drum (1) is closed by a fluff filter (5) rigidly connected to the drum (1) through which a charging device (6) axially projects into the drum (1), and wherein a wiper (7), connected to the charging device (6), is provided on the inner side of the fluff filter (5).

24. Device for carrying out the method according to claims 1 to 9, comprising a substantially vertically arranged drum having a charging end portion on top and a discharging end portion on bottom, installations for disintegrating, revolving, and transporting waste and/or residual materials in at least two superjacent stages, a hot gas feeding device at the discharge end portion and an exhaust gas duct on the charging end portion, characterized in that the drum (40) is of conical shape with an increasing diameter considered from the charging end portion (43) to the discharge end portion (51), and in that in each individual stage wiping or stirring arms (54, 55, 58, 59) are provided, the length of which increases from stage to stage.

25. Device as claimed in claim 24, wherein a base (50) is provided on the discharge end portion which is conical and convex relative to an axis Y -Y, and wherein, seated in the base (50), a multi-staged stirrer (57) is provided to which the wiping and/or stirring arms (58, 59, 54, 55) are secured.

26. Device as claimed in claim 25, wherein the stirring or wiping arms (58,59, 54, 55) are curved and/or slanting.

27. Device as claimed in at least one of the claims 10 and 24, wherein the drum (1, 40) is provided with an insulating cover (27) on its external wall.

28. Device as claimed in at least one of the claims 10 and 24, wherein the drum (1, 40) is followed by a combustion chamber (31) which is connected to the charging end portion (4, 43) as well as to the discharge end portion (11, 51) of the drum (1, 40).

## Revendications

1. Procédé de traitement thermique de déchets et/ou résidus, en particulier de soie de verte, de fibres de verte, de laine de verte et de mat de fibres de verte, avec des revêtements en matières organiques, qui sont transportés de l'entrée à la sortie d'un tambour et chauffés pour atteindre une température qui correspond au moins à la température d'embrasement sans feu et/ou d'évaporation des revêtements et est au-dessous de la température d'amollissement des déchets et/ou résidus, caractérisé en ce que les déchets et/ou résidus (22, 61) sont démêlés constamment, de préférence à intensité croissante, de l'entrée (6) à la sortie (11) du tambour (1, 40), de façon à ce qu'à la sortie (11) la combustion complète des restes des composantes organiques des déchets et/ou résidus (22, 61) soit achevée et que jusqu'à l'entrée (6) les gaz d'échappement soient prénettoyés en éliminant les petites particules de déchets et/ou résidus (22, 61), et en ce que les déchets et/ou résidus (22, 61) sont chauffés uniquement par un courant de gaz chaud (65) passant de la sortie (11) à l'entrée (6) du tambour (1, 40).

2. Procédé selon la revendication 1 caractérisé en ce que les déchets et/ou résidus (22, 61) sont broyés avant le traitement thermique de sorte que pour l'essentiel, leurs plus grandes dimensions ne dépassent pas 30 cm.

3. Procédé selon la revendication 2, caractérisé en ce que le démêlage est effectué en faisant tourner le tambour (1) dans lequel sont montées des éléments (14, 15).

4. Procédé selon la revendication 2, caractérisé en ce que le démêlage est effectué par des éléments (45, 56, 57) en rotation dans le tambour (40) immobile.

5. Procédé selon la revendication 3 ou 4, caractérisé en ce que les éléments (14, 15, 45, 56, 57) tournent à entre 5 et 30, de préférence entre 8 et 15, tours par minute.

6. Procédé selon la revendication 5, caractérisé en ce que le courant de gaz chaud (65) présente une température d'entre 250 et 850°C et est introduit en sens inverse de la rotation des éléments (14, 15, 45, 56, 57) et gauche par rapport à l'axe du tambour (X-X).

7. Procédé selon la revendication 6, caractérisé en ce que la vitesse du courant de gaz chaud (65) ne dépasse guère 0,2 m/sec par rapport à la section moyenne libre du tambour et à 0°C.

8. Procédé selon la revendication 7, caractérisé en ce que les déchets et/ou résidus (22, 61) séjournent dans le tambour (1, 40) au moins pendant 2,5 min.

9. Procédé selon au moins une des revendications précitées, caractérisé en ce que les gaz d'échappement sortant du tambour (1, 40) sont filtrés et brûlés et que le gaz chaud (65) qui en résulte est réintroduit dans le tambour (1, 40), du moins en partie.

10. Procédé comprenant un tambour disposé pour l'essentiel horizontalement avec des éléments résistant aux températures élevées et montées essentiellement à angle droit par rapport à la paroi intérieure du tambour pour démêler, renverser et transporter les déchets et/ou résidus, ledit tambour présentant un dispositif d'alimentation en gaz chaud à la sortie et un dispositif d'évacuation des gaz d'échappement à l'entrée, pour réaliser le procédé selon les revendications 1 à 9, caractérisé en ce que les éléments (14, 15) sont au moins en partie des broches ou dents de scie (14) aux extrémités libres pointues ou arrondies (36), dont la hauteur radiale varie entre 1/15 et 1/20 du diamètre du tambour (1).

11. Dispositif selon la revendication 10, caractérisé en ce que les hauteurs des broches ou dents de scie (14) mesurent 1/10 du diamètre du tambour (1), mais au moins 8 cm.

12. Dispositif selon la revendication 10 ou 11, caractérisé en ce que les broches ou dents de scie (14) sont montées sur ou contre des bandes de matériel (15, 18) dont la hauteur varie entre 1/2 et 2/3 de la hauteur des broches ou des dents de scie.

13. Dispositif selon au moins une des revendications 9 à 12, caractérisé en ce que les broches ou dents de scie (14) sont disposées dans le tambour (1) essentiellement en rangées (16) le long de génératrices ou de lignes courbes.

14. Dispositif selon au moins une des revendications 10 à 13, caractérisé en ce que les broches ou dents de scie (14) sont coudées à leurs extrémités libres dans le sens de la rotation, en ce que les coudures vont de leurs bouts (36) jusqu'à la moitié de la hauteur des broches ou dents de scie (14) et en ce que les angles de coudure varient entre 30° et 90°, de préférence 45°.

15. Dispositif selon la revendication 12, caractérisé en ce qu'il y a une fente (39) entre les bandes de matériel (15, 18) et la paroi intérieure du tambour.

16. Dispositif selon la revendication 13, caractérisé en ce que la distance entre deux bouts (36) d'une rangée (16) varie entre 50 et 200 mm, de préférence 100 mm.

17. Dispositif selon la revendication 13, caractérisé en ce que la distance angulaire entre deux rangées voisines (16) varie entre 10 et 45°, de préférence entre 15 et 30°, par rapport au périmètre du tambour.

18. Dispositif selon la revendication 16, caractérisé en ce que la distance linéaire entre deux rangées voisines (16) varie entre 100 et 350 mm.

19. Dispositif selon au moins une des revendications précitées, caractérisé en ce que du côté de l'entrée (4) sont prévues des broches ou dents de scies coudées (14) et du côté de la sortie (11) des bandes de matériel (15) pour démêler, renverser et transporter les déchets et/ou résidus (22, 61).

20. Dispositif selon la revendication 14, caractérisé en ce que les angles de coudure des broches (14) et/ou bandes de matériel (15) sont différents dans un tambour (1).

21. Dispositif selon au moins une des revendications 10 à 20, caractérisé en ce que le diamètre du tambour est d'entre 0,8 et 2 m et la longueur du tambour d'entre 1,5 et 10 m.

22. Dispositif selon la revendication 10, caractérisé en ce que des pales directrices (9) sont fixées à la paroi intérieure du côté de l'entrée (4) du tambour (1)

23. Dispositif selon la revendication 10 ou 22, caractérisé en ce que l'entrée (4) du tambour (1) est fermée par un filtre (5) connecté rigidement au tambour (1), à travers duquel un dispositif d'alimentation (6) pénètre axialement dans le tambour (1) et qu'à l'intérieur du filtre (5) est située une racle (7) connectée avec le dispositif d'alimentation (6).

24. Dispositif comprenant un tambour en position essentiellement verticale possédant une entrée du côté supérieur et une sortie du côté inférieur, des éléments pour démêler, renverser et transporter les déchets et/ou résidus, disposées au moins sur deux niveaux superposés, un dispositif d'alimentation en gaz chaud à la sortie et un dispositif d'évacuation des gaz d'échappement à l'entrée, pour réaliser le procédé selon les revendications 1 à 9, caractérisé en ce que le tambour (40) est taillé en cône, dont le diamètre s'accroît de l'entrée (43) à la sortie (51), et en ce que des bras stripeurs ou mélangeurs (54, 55, 58, 59) dont la longueur augmente de niveau en niveau sont prévus sur les différents niveaux.

25. Dispositif selon la revendication 24, caractérisé en ce qu'est prévu un fond (50) du côté de la sortie voûté de préférence en cône vers l'axe géométrique (Y-Y), et que sur ce fond (50) est logé un mélangeur à plusieurs niveaux (57) sur lequel sont montés les bras stripeurs ou mélangeurs (54, 55, 58, 59).

26. Dispositif selon la revendication 25, caractérisé en ce que les bras stripeurs et/ou mélangeurs (58, 59, 54, 55) sont courbés et/ou biseautés.

27. Dispositif selon au moins une des revendications 10 et 24, caractérisé en ce que la surface extérieure du tambour (1, 40) est recouverte d'un manteau isolant (27).

28. Dispositif selon au moins une des revendications 10 et 24, caractérisé en ce que le tambour (1, 40) est suivi d'une chambre de combustion (31) connectée et à l'entrée (4, 43) et à la sortie (11, 51) du tambour (1, 40).
